# EUROPÄISCHE PATENTSCHRIFT

(11) **EP 3 721 309 B1**
(45) Veröffentlichungstag und Bekanntmachung des Hinweises auf die Patenterteilung: **10.11.2021**
(21) Anmeldenummer: 18822014.9
(22) Anmeldetag: 06.12.2018
(51) Int. Cl.: G05D 1/02, B60T 7/18, B60T 7/22, B60T 8/1755, B60W 30/09, G08G 1/00

(54) **VERFAHREN ZUR AUSLÖSUNG EINES SELBSTTÄTIGEN NOTBREMSVORGANGS BEI EINER FAHRZEUGKOLONNE**
METHOD FOR TRIGGERING AN AUTOMATIC EMERGENCY BRAKING OPERATION IN A VEHICLE CONVOY
PROCÉDÉ DE DÉCLENCHEMENT D'UN PROCESSUS DE FREINAGE D'URGENCE AUTOMATIQUE DANS UNE COLONNE DE VÉHICULES

(30) Priorität: 08.12.2017 DE 102017011346; 09.02.2018 DE 102018001055
(43) Veröffentlichungstag der Anmeldung: 14.10.2020
(73) Patentinhaber: KNORR-BREMSE Systeme für Nutzfahrzeuge GmbH, 80809 München (DE)
(72) Erfinder: HECKER, Falk, 71706 Markgröningen (DE); GÜCKER, Ulrich, 71701 Schwieberdingen (DE); MUSTAPHA, Adnan, 75433 Maulbronn (DE)
(86) Internationale Anmeldenummer: PCT/EP2018/083809
(87) Internationale Veröffentlichungsnummer: WO 2019/110735

(56) Entgegenhaltungen:
- DE-A1- 10 258 617
- DE-A1-102008 045 481
- DE-A1-102010 028 637
- DE-A1-102015 104 547

## Beschreibung

Die Erfindung geht aus von einem Verfahren gemäß dem Oberbegriff von Anspruch 1. Weiterhin betrifft die Erfindung gemäß Anspruch 11 auch eine lose gekoppelte oder ungekoppelte Fahrzeugkolonne aus einem vorausfahrenden Fahrzeug und wenigstens einem diesem nachfolgenden Fahrzeug, wobei die Fahrzeugkolonne nach einem solchen Verfahren gesteuert ist.

Ein solches Verfahren beschreibt einen Notbremsassistenten *(Advanced Emergency Braking System kurz:* AEBS), bei welchem mittels Radarsensor, Kamera und/oder Laser Hindernisse in Front eines Fahrzeugs erkannt und der Fahrer bei einer drohenden Kollision mit dem Hindernis gewarnt wird. Reagiert der Fahrer nicht auf diese Warnung, so löst der Notbremsassistent eine Notbremsung aus, damit es gar nicht erst zur Kollision kommt. Falls eine Kollision unvermeidbar ist, verringert der Notbremsassistent wenigstens die Stärke des Aufpralls und damit auch das Verletzungsrisiko für die Insassen der beteiligten Fahrzeuge.

Ein solches gattungsgemäßes Verfahren ist aus DE 10 2015 104 547 A1 bekannt. Dort wird der selbsttätige Notbremsvorgang nach Ablauf einer Warnzeitdauer ausgelöst, während der dem Fahrer die Möglichkeit gegeben wird, durch Eingreifen in Form einer Fahrerbremsanforderung den selbsttätigen Notbremsvorgang zu vermeiden. Die Warnzeitdauer ist dabei zeitlich in zwei Stufen unterteilt, wobei innerhalb einer ersten Warnzeitdauer eine optische und/oder akustische Fahrerwarnung ausgegeben wird. Falls der Fahrer darauf nicht reagiert, dann wird zu Beginn einer zweiten Warnzeitdauer eine Teilbremsung mit einer Teilbremsverzögerung eingeleitet, die kleiner als eine vorgegebene (maximale) Notbremsverzögerung ist. Erst wenn der Fahrer auch die zweite Warnzeitdauer verstreichen lässt, ohne dass er die Bremse betätigt, dann wird der Notbremsvorgang automatisch ausgelöst. Im Rahmen der gesamten Warnzeitdauer hat der Fahrer daher die Möglichkeit, die Gefahrensituation durch Betätigen der Bremse abzuwenden.

Weiterhin kann mittels der in modernen Kraftfahrzeugen vorhandenen Fahrassistenzsysteme die Fahrt für einem Führungsfahrzeug nachfolgende Fahrzeuge soweit automatisiert werden, dass die Fahrzeuge innerhalb einer Fahrzeugkolonne lose oder elektronisch gekoppelt sind. Die Fahrzeugführer der dem Führungsfahrzeug nachfolgenden Kraftfahrzeuge müssen somit während der Kolonnenfahrt nicht mehr selbstständig die Verkehrsbedingungen überwachen. Eine solche lose gekoppelte Fahrzeugkolonne umfasst mindestens ein erstes führendes sowie ein letztes Fahrzeug und evtl. mittlere Fahrzeuge. Es ist daher bekannt, Kraftfahrzeuge elektronisch gekoppelt, längs- und quergeregelt möglichst dicht hintereinander fahren zu lassen. Das jeweilige Folgekraftfahrzeug orientiert sich dabei beispielsweise optisch am vorausfahrenden Kraftfahrzeug. Die Kraftfahrzeuge sind auch beispielsweise mit Sensoren zu Totwinkel- und Rückraumüberwachung und zur Fahrspurorientierung sowie mit Mitteln wenigstens zur Fahrzeug-zu-Fahrzeug-Kommunikation ausgestattet. Derartige lose gekoppelte Fahrzeugverbände oder Fahrzeugkolonnen von Kraftfahrzeugen werden in der Literatur im Allgemeinen als "Platoon" bezeichnet.

Die Kraftfahrzeuge können auch über entsprechende Fahrerassistenzsysteme zur automatischen Abstandshaltung (auch als ACC-Systeme bekannt - Adaptive Cruise Control) zu der Fahrzeugkolonne elektronisch gekoppelt sein. Hierzu kann der aktuelle Abstand des vorausfahrenden Kraftfahrzeugs über einen Sensor in dem dahinterfahrenden Kraftfahrzeug bestimmt werden und der Abstand auf einen vorgegebenen Sollwert, z. B. 8 m, geregelt werden. Zur Abstandsmessung können beispielsweise Radarsensoren oder Lidarsensoren verwendet werden.

Bei enger Kolonnenfahrt während Fahrten ab ca. 80 km/h können die Luftwiderstände der Kolonnenfahrzeuge um bis zu 30% reduziert werden. Hierbei sind typischerweise Abstände im Bereich von 8 m bis 20 m zwischen dem vorausfahrenden und dem diesem nachfolgenden Kraftfahrzeug günstig, um eine signifikante Reduktion des Luftwiderstands zu erreichen. Je kleiner die Abstände zwischen den beteiligten Kraftfahrzeugen sind, desto kleiner werden die Luftwiderstände der einzelnen Kraftfahrzeuge. Zur signifikanten Reduzierung des Luftwiderstands werden aufgrund der geringen Abstände höhere Anforderungen an die Fahrerassistenzsysteme zu automatischen Abstandshaltung gestellt.

Beispielhafte Verfahren zur elektronischen Kopplung von Kraftfahrzeugen über Fahrerassistenzsysteme zu Fahrzeugkolonnen sind in DE 10 2007 046 765 A1 oder EP 1 569 183 A2 beschrieben.

An die Steuerung und Regelung einer Fahrzeugkolonne werden unter anderem die folgenden Anforderungen gestellt:
- Einhalten eines kurzen Längsab- stands der beteiligten Fahrzeuge untereinander (z.B. 8m - 20m) mit einer definierten Toleranz.
- Automatische Querführung der Folgefahrzeuge möglichst exakt in der Spur des Führungsfahrzeugs.
- Sicherstellen der Stabilität der Fahrzeugkolonne, d.h. insbesondere Vermeiden des "Ziehharmonika-Effekts" (Kettenstabilität - string stability), der nicht nur zu einem erhöhten Verbrauch führt, sondern auch die Gefahr von Auffahrunfällen signifikant erhöht. Die Kettenstabilität ist dabei für Längs- und Querführung einzuhalten.
- Kleine Änderungen in der Geschwindigkeit der vorausfahrenden Kraftfahrzeuge der Fahrzeugkolonne dürfen nicht von den nachfolgenden Kraftfahrzeugen verstärkt ausgeführt werden.
- Für die Führung in Querrichtung darf es bei den nachfolgenden Kraftfahrzeugen nicht zu einem Schneiden von Kurven und damit zu einem Verlassen der Fahrspur kommen.
- Ausreichend schnelle Bremsreaktion der Folgefahrzeuge bei starkem Bremsen des Führungsfahrzeugs zur Vermeidung von Auffahrunfällen.

Durch unterschiedliche technische Ausrüstungen und Eigenschaften der an der Fahrzeugkolonne beteiligten Kraftfahrzeuge wie z.B. Motorleistung, Leistungsfähigkeit der Dauer- oder Betriebsbremse, Fahrzeugkonfiguration, Beladungszustand und Reifeneigenschaften ist die Einhaltung der obigen Anforderungen oft erschwert.

In einem Fall, in welchem beispielsweise vor dem ersten führenden Kraftfahrzeug der Fahrzeugkolonne plötzlich ein Hindernis auftaucht, die entweder den Fahrer des ersten führenden Kraftfahrzeugs oder eine Autopiloteinrichtung dieses Kraftfahrzeugs zu einer Notbremsung eigentlich mit maximal möglicher Verzögerung zwingen würde, entsteht ein Dilemma.

Denn eigentlich könnte das erste führende Kraftfahrzeug mit seiner ihm maximal zur Verfügung stehenden Verzögerung bremsen, um das Kollisionsrisiko bzw. eine Kollisionsgeschwindigkeit mit dem Hindernis so gering wie möglich zu halten. Damit besteht aber das Risiko, dass es zum Auffahren von Kraftfahrzeugen innerhalb der Fahrzeugkolonne kommt, falls sich Kraftfahrzeuge in der Fahrzeugkolonne befinden, welche z.B. wegen schwächerer Bremsen oder einer höheren Beladung eine geringere maximale Verzögerung als das erste führende Kraftfahrzeug aufbringen können.

Damit die nachfolgenden Kraftfahrzeuge nicht aufeinander auffahren, könnte daher das erste führende Kraftfahrzeug mit der maximalen Verzögerung des am "schwächsten" bremsenden Kraftfahrzeugs der Fahrzeugkolonne abgebremst werden. Dies würde allerdings dazu führen, dass das führende erste Kraftfahrzeug aufgrund der dann nach dem hinsichtlich Bremsen "schwächsten" Teilnehmer festgelegten Vorgaben mit einer geringeren, nämlich der relativ geringen maximalen Verzögerung des am "schwächsten" bremsenden Teilnehmers bremst. Infolgedessen würden in diesem Fall das Kollisionsrisiko bzw. die Kollisionsgeschwindigkeit mit dem Hindernis ansteigen.

DE 10 2010 028 637 A1 offenbart ein Verfahren zur elektronischen Kopplung eines ersten Kraftfahrzeugs und eines zweiten Kraftfahrzeugs, wobei das zweite Fahrzeug das vorderste Fahrzeug einer Fahrzeugkolonne bildet und mit einer Sensorik zur Erkennung von Hindernissen ausgestattet ist. Die Bremsvorgänge in der Fahrzeugkolonne werden derart koordiniert, dass das vorderste Fahrzeug der Kolonne zeitlich zuletzt bremst und das letzte Fahrzeug der Kolonne zeitlich zuerst bremst.

Der vorliegenden Erfindung liegt die Aufgabe zugrunde, das Verfahren im Hinblick auf ein geringeres Kollisionsrisiko zu verbessern. Weiterhin sollen auch eine lose gekoppelte oder ungekoppelte Fahrzeugkolonne derart weitergebildet werden, dass sie nach einem solchen Verfahren betrieben werden.

Diese Aufgabe wird erfindungsgemäß durch die Merkmale der Ansprüche 1 und 11 gelöst. Vorteilhafte Weiterbildungen der Erfindung sind Gegenstand der beigefügten Unteransprüche.

### Offenbarung der Erfindung

Die Erfindung basiert auf einem Verfahren zur Auslösung eines selbsttätigen Notbremsvorgangs bei einem wenigstens einem nachfolgenden Fahrzeug vorausfahrenden Fahrzeug zur Vermeidung eines Auffahrens des vorausfahrenden Fahrzeugs auf ein Hindernis, wobei
a) bei dem vorausfahrenden Fahrzeug eine Fahrerwarnung ausgelöst wird, wenn wenigstens eine Warnbedingung erfüllt ist, wobei
b) die Erfüllung der Warnbedingung angibt, dass aufgrund der momentanen Fahrsituation des vorausfahrenden Fahrzeugs relativ zum Hindernis der selbsttätige Notbremsvorgang auszulösen ist, wobei
c) der selbsttätige Notbremsvorgang bei dem vorausfahrenden Fahrzeug erst nach Auslösung der Fahrerwarnung und anschließendem Ablauf einer Warnzeitdauer ausgelöst wird, wobei
d) die Warnzeitdauer als Gesamtwarnzeitdauer eine erste Warnzeitdauer und eine zweite Warnzeitdauer beinhaltet, wobei
e) während der ersten Warnzeitdauer optische und/oder akustische Warnsignale ausgegeben werden und im Rahmen der sich an die erste Warnzeitdauer unmittelbar anschließenden zweiten Warnzeitdauer eine Teilbremsung des vorausfahrenden Fahrzeugs mit einer Teilbremsverzögerung durchgeführt wird, welche kleiner als eine bei dem selbsttätigen Notbremsvorgang des vorausfahrenden Fahrzeugs wirkende Notbremsverzögerung ist.

Unter einem Hindernis kann dabei entweder ein fest stehendes Hindernis, ein Hindernis in Form eines vorausfahrenden oder in die Fahrspur des betreffenden Fahrzeugs und vor diesem einscherendes Fahrzeugs oder ein die Fahrspur des betreffenden Fahrzeugs in einem beliebigen Winkel kreuzendes Fahrzeug verstanden werden.

Gemäß der Erfindung ist dann vorgesehen, dass
f) bei dem wenigstens einen nachfolgenden sich noch in einem ungebremsten Zustand befindlichen Fahrzeug frühestens zu einem ersten Zeitpunkt, zu welchem die erste Warnzeitdauer bei dem vorausfahrenden Fahrzeug beginnt und spätestens zu einem zweiten Zeitpunkt, an welchem die erste Warnzeitdauer bei dem vorausfahrenden Fahrzeug endet, eine selbsttätige Bremsung eingeleitet wird, wobei
g) bei dem wenigstens einen nachfolgenden Fahrzeug als selbsttätige Bremsung eine Teilbremsung mit einer Teilbremsverzögerung eingeleitet wird, welche kleiner als eine maximal mögliche Notbremsverzögerung des wenigstens einen nachfolgenden Fahrzeugs ist.

Unter "eine selbsttätige Bremsung einleiten" soll verstanden werden, dass nicht nur ein Lüftspiel der Bremsaktuatoren des wenigstens einen nachfolgenden Fahrzeugs überwunden wird sondern diese Einleitung bei den Bremsaktuatoren den Aufbau einer wirksamen Bremskraft nach sich zieht, welche in der Lage ist, das wenigstens eine nachfolgende Fahrzeug zu verzögern. Das Einleiten der Bremsung schließt daher einen gleichzeitigen oder nachfolgenden Aufbau von Bremskräften ein. Dabei ist klar, dass zwischen dem Signal zum Einleiten der Bremsung und dem Wirksamwerden der Bremskräfte in den Bremsaktua- toren eine wenn auch sehr kurze zeitliche Verzögerung vorhanden ist.

Folglich befindet sich der Zeitpunkt, an welchem bei dem wenigstens einen, sich noch in einem ungebremsten Zustand befindlichen nachfolgenden Fahrzeug eine Bremsung eingeleitet wird, in einem zeitlichen Bereich, welcher sich von dem ersten Zeitpunkt, an welchem die erste Warnzeitdauer bei dem vorausfahrenden Fahrzeug beginnt bis zu dem zweiten Zeitpunkt, an welchem die erste Warnzeitdauer bei dem vorausfahrenden Fahrzeug endet.

Das nachfolgende Fahrzeug kann dabei ein dem vorausfahrenden Fahrzeug unmittelbar nachfolgendes Fahrzeug darstellen, oder wenigstens ein dem vorausfahrenden Fahrzeug mittelbar nachfolgendes Fahrzeug, wobei sich zwischen dem vorausfahrenden Fahrzeug und dem wenigstens einen nachfolgenden Fahrzeug noch wenigstens ein weiteres Fahrzeug befinden kann.

Weiterhin können selbstverständlich auch mehrere dem vorausfahrenden Fahrzeug nachfolgende Fahrzeuge vorhanden sein, bei welchen dann die Bremsung synchron frühestens zu dem ersten Zeitpunkt und spätestens zu dem zweiten Zeitpunkt eingeleitet wird.

Vorzugsweise wird bei dem wenigstens einen nachfolgenden sich noch in einem ungebremsten Zustand befindlichen Fahrzeug (etwa) zu dem ersten Zeitpunkt oder kurz nach dem ersten Zeitpunkt, an welchem die erste Warnzeitdauer bei dem vorausfahrenden Fahrzeug beginnt, eine selbsttätige Bremsung eingeleitet, spätestens jedoch zu dem zweiten Zeitpunkt, an welchem die erste Warnzeitdauer bei dem vorausfahrenden Fahrzeug endet. Mit anderen Worten wird bei dem wenigstens einen nachfolgenden Fahrzeug bereits eine selbsttätige Bremsung ausgelöst bzw. vorgenommen, wenn die erste Warnzeitdauer bei dem vorausfahrenden Fahrzeug gerade beginnt. Während der ersten Warnzeitdauer wird bei dem vorausfahrenden Fahrzeug noch keine Teilbremsung eingeleitet, aber es werden optische und/oder akustische Warnsignale für den Fahrer des vorausfahrenden Fahrzeugs ausgegeben, damit dieser veranlasst wird, die Bremse zu betätigen und dadurch die Teilbremsung abzubrechen und/oder eine Einleitung des selbsttätigen Notbremsvorgangs vermieden wird.

Demnach wird bei dem wenigstens einen nachfolgenden Fahrzeug eine Bremsung bereits voreilend eingeleitet, während bei dem vorausfahrenden Fahrzeug gerade die erste Warnzeitdauer beginnt oder bereits begonnen hat, aber noch nicht abgelaufen ist, innerhalb der der Fahrer des vorausfahrenden Fahrzeugs zu einer von ihm ausgelösten Bremsung veranlasst wird. Dies hat den positiven Effekt, dass etwaige Signallauf- und Reaktionszeiten, welche beispielsweise bei einer zwischen dem vorausfahrenden Fahrzeug und dem wenigstens einen nachfolgenden Fahrzeug aktiven Fahrzeugnachfolgeregelung stets herrschen, kompensiert werden können, was das Kollisionsrisiko zwischen dem vorausfahrenden Fahrzeug und dem wenigstens einen nachfolgenden Fahrzeug senkt. Infolge der Erfindung besteht dann die Möglichkeit, die im Rahmen des Notbremsassistenten (AEBS) durchgeführte Teilbremsung und/oder auch die Notbremsung innerhalb des Notbremsvorgangs mit einer jeweils höheren Verzögerung durchzuführen, was das das Kollisionsrisiko zwischen dem vorausfahrenden Fahrzeug und dem Hindernis senkt.

Durch die in den Unteransprüchen aufgeführten Maßnahmen sind vorteilhafte Weiterbildungen und Verbesserungen der Erfindung möglich.

Beispielsweise kann bei dem wenigstens einen nachfolgenden Fahrzeug die (bereits) eingeleitete selbsttätige Bremsung mit Ablauf der ersten Warnzeitdauer bei dem vorausfahrenden Fahrzeug abgebrochen werden.

Gemäß einer Weiterbildung kann (können) der Beginn der ersten Warnzeitdauer bei dem vorausfahrenden Fahrzeug und/oder der Ablauf der ersten Warnzeitdauer bei dem vorausfahrenden Fahrzeug von dem vorausfahrenden Fahrzeug zu dem wenigstens einen nachfolgenden Fahrzeug mittels einer Fahrzeug-zu-Fahrzeug-Kommunikation übermittelt werden.

Besonders bevorzugt bilden wenigstens das vorausfahrende Fahrzeug und das wenigstens eine nachfolgende Fahrzeug und gegebenenfalls noch weitere Fahrzeuge zusammen eine ungekoppelte Fahrzeugkolonne oder eine elektronisch gekoppelte Fahrzeugkolonne, wobei die Fahrzeuge der Fahrzeugkolonne auf Basis einer der Fahrzeugkolonne zugeordneten, vorgebbaren Gesamtbetriebsstrategie zumindest vorübergehend in einem vorgebbaren, gleichbleibenden Längsabstand zueinander entlang einer Fahrstrecke bewegt werden.

Beispielsweise wird diese elektronische Kopplung der Fahrzeuge der Fahrzeugkolonne aufgelöst, wenn die erste Warnzeitdauer bei dem vorausfahrenden Fahrzeug abgelaufen und wenn bei dem wenigstens einen nachfolgenden Fahrzeug eine selbsttätige Bremsung eingeleitet worden ist. Dann stellen durch eine Fahrzeugfolgeregelung relativ gering eingestellte Längsabstände zwischen den Fahrzeugen der Fahrzeugkolonne ein Kollisionsrisiko zwischen den Fahrzeugen der Fahrzeugkolonne dar, wenn durch Einleiten der erste Warnzeitdauer bei dem vorausfahrenden Fahrzeug ein Indiz dafür vorliegt, dass ein Kollisionsrisiko des vorausfahrenden Fahrzeugs mit dem Hindernis besteht. Nach der Auflösung der Fahrzeugkolonne können in den Fahrzeugen der Fahrzeugkolonne vorhandene ACC-Systeme individuell einen größeren einzuhaltenden Längsabstand einstellen als er bei Kolonnenfahrt vorliegt, so dass dann nach der Auflösung der Fahrzeugkolonne das Kollisionsrisiko zwischen den an der (ehemaligen) Fahrzeugkolonne teilnehmenden Fahrzeuge gesenkt wird.

Generell kann das vorausfahrende Fahrzeug ein führendes Fahrzeug der Fahrzeugkolonne oder ein Fahrzeug innerhalb der Fahrzeugkolonne sein. Im ersten Fall wird das Hindernis beispielsweise durch ein in Fahrtrichtung der Fahrzeugkolonne gesehen vor dem führenden Fahrzeug der Fahrzeugkolonne befindliches, stationäres oder bewegliches Objekt oder Fahrzeug gebildet, im zweiten Fall beispielsweise durch ein vor dem vorausfahrenden Fahrzeug in die Fahrzeugkolonne einscherendes Objekt oder Fahrzeug.

Weiterhin kann beispielsweise auch nur bei einem, bei mehreren oder allen dem führenden Fahrzeug nachfolgenden Fahrzeugen einer lose oder elektronisch gekoppelten oder auch ungekoppelten Fahrzeugkolonne an dem ersten Zeitpunkt, an welchem die erste Warnzeitdauer bei dem führenden Fahrzeug beginnt, jeweils eine selbsttätige Bremsung eingeleitet werden. Unter einer ungekoppelten Fahrzeugkolonne wird ein Verband oder eine Kolonne aus Fahrzeugen verstanden, bei welchem die Fahrzeuge ohne elektronische Kopplung hintereinander herfahren und beispielsweise jeweils durch an Bord befindliche ACC-System einen Mindestabstand zueinander einhalten.

Besonders bevorzugt wird bei dem vorausfahrenden Fahrzeug die Warnzeitdauer abhängig von einer Relativbewegungssituation zwischen dem vorausfahrenden Fahrzeug und dem Hindernis eingestellt und/oder abhängig von einer sich zeitlich ändernden Relativbewegungssituation zwischen dem vorausfahrenden Fahrzeug und dem Hindernis angepasst.

Falls beispielsweise das Hindernis z.B. in Form eines vorausfahrenden Fahrzeugs verzögert, dann wird die Warnzeitdauer auf der Basis der dann vorliegenden Relativbewegungssituation zwischen dem Fahrzeug und dem Hindernis gegenüber einer vorgegebenen oder eingestellten Anfangs-Warnzeitdauer beispielsweise verkürzt. Denn wenn nach Ablauf der Warnzeitdauer der Notbremsvorgang mit maximaler Notbremsverzögerung stattfindet, wofür eine gewisse Notbremsverzögerungszeit notwendig ist, um einen Sicherheitsabstand zum Hindernis einzuhalten, so steht in diesem Fall weniger Eingriffszeit (Warnzeitdauer) für den Fahrer zur Verfügung. Würde man in einem solchen Fall eine Warnzeitdauer unabhängig von der Relativbewegungssituation fest vorgegeben, so besteht die Gefahr, dass diese zu lang ist und dass demzufolge das betreffende Fahrzeug mit dem Hindernis kollidiert.

Im Gegensatz dazu wird die Warnzeitdauer beispielsweise verlängert, wenn das Hindernis z.B. in Form eines vorausfahrenden Fahrzeugs beschleunigt. Denn in diesem Fall steht dem Fahrer mehr Zeit zur Verfügung, mit einem Bremsmanöver aktiv einzugreifen.

Dadurch ergibt sich eine an die jeweilige Verkehrssituation besser angepasste variable oder dynamische Warnzeitdauer. In vorteilhafter Weise wird daher die Warnzeitdauer dann an die gerade vorliegende Verkehrssituation des Fahrzeugs in Bezug zum Hindernis angepasst.

Bei der Relativbewegungssituation zwischen dem vorausfahrenden Fahrzeug und dem Hindernis kann wenigstens eine der folgenden Größen berücksichtigt werden: Die Geschwindigkeit und/oder die Beschleunigung des vorausfahrenden Fahrzeugs in Fahrtrichtung und/oder quer zur Fahrtrichtung, die Geschwindigkeit und/oder die Beschleunigung des Hindernisses in Fahrtrichtung und/oder quer zur Fahrtrichtung, die Relativgeschwindigkeit und/oder die Relativbeschleunigung zwischen dem vorausfahrenden Fahrzeug und dem Hindernis in Fahrtrichtung und/oder quer zur Fahrtrichtung, der Abstand zwischen dem vorausfahrenden Fahrzeug und dem Hindernis.

Da die Auswertung von Sensordaten von Sensoren in der Auswerteeinrichtung, welche die Relativbewegungssituation zwischen dem Fahrzeug und dem Hindernis erfassen, in der Regel zyklisch, d.h. in bestimmten Zeitabständen erfolgt, wird auch die Warnzeitdauer bevorzugt zyklisch eingestellt oder angepasst.

Optional kann auch vorgesehen sein, dass falls der Fahrer des vorausfahrenden Fahrzeugs innerhalb der Warnzeitdauer eine Bremsung des vorausfahrenden Fahrzeugs auslöst, dann die selbsttätige Teilbremsung und/oder der selbsttätige Notbremsvorgang nicht ausgelöst werden. Denn dann gibt der Fahrer des vorausfahrenden Fahrzeugs durch die von ihm durch das Bremspedal ausgelöste Bremsung zu verstehen, dass er die Situation unter Kontrolle hat und deshalb die selbsttätige Teilbremsung und/oder der selbsttätige Notbremsvorgang nicht ausgelöst werden muss. Diese Folge kann auch mit der Bedingung einer Mindestverzögerung gekoppelt werden, welche durch die Fahrerbremsung bei dem vorausfahrenden Fahrzeug erreicht werden muss.

Alternativ können die gesamte Warnzeitdauer, die erste Warnzeitdauer und/oder die zweite Warnzeitdauer auch auf einen fest vorgegebenen Wert voreingestellt und dann nicht mehr verändert werden.

Die Erfindung betrifft auch eine lose oder elektronisch gekoppelte oder ungekoppelte Fahrzeugkolonne aus einem vorausfahrenden Fahrzeug und wenigstens einem diesem nachfolgenden Fahrzeug, wobei die Fahrzeugkolonne nach einem oben beschriebenen Verfahren gesteuert ist.

Die Erfindung wird nachstehend anhand eines Ausführungsbeispiels unter Bezugnahme auf die beigefügte Zeichnung näher beschrieben. Es zeigen:
- Fig. 1: Fig.1 eine schematische Seitenansicht einer Fahrzeugkolonne aus miteinander lose gekoppelten Kraftfahrzeugen;
- Fig.2: einen schematischen Ablaufplan einer bevorzugten Ausführungsform des erfindungsgemäßen Verfahrens;
- Fig.3A: ein Diagramm, auf welchem die Beschleunigung a und die Geschwindigkeit v eines vorausfahrenden Fahrzeugs der Fahrzeugkolonne von Fig.1 sowie der Abstand d zu einem diesem vorausfahrenden weiteren Fahrzeug in Abhängigkeit von der Zeit t nach Auslösen einer Fahrerwarnung aufgetragen ist;
- Fig.3B: ein Diagramm, auf welchem die Geschwindigkeit v eines dem vorausfahrenden Fahrzeug nachfolgenden Fahrzeugs der Fahrzeugkolonne von Fig.1 aufgetragen ist.

### Beschreibung des Ausführungsbeispiels

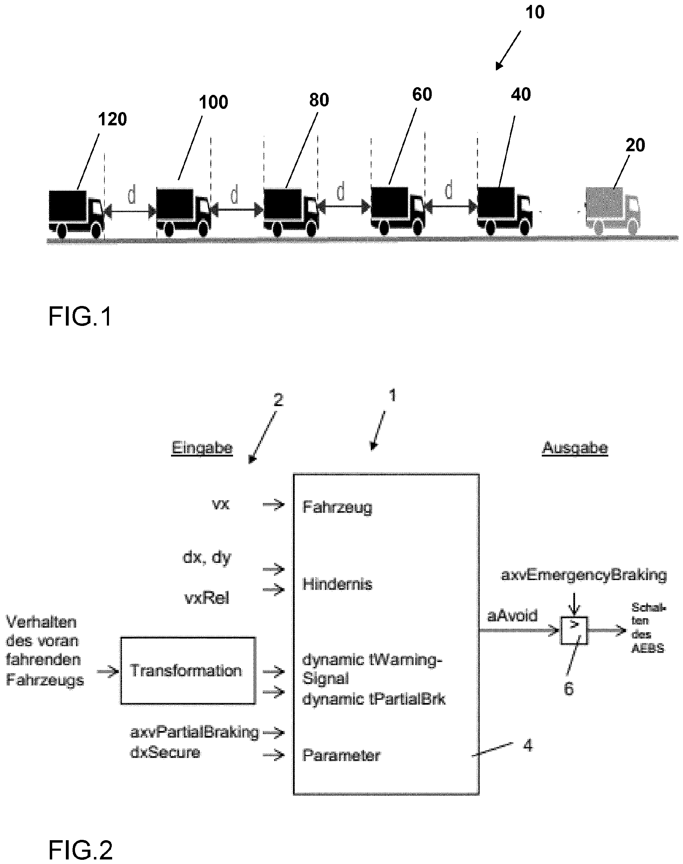

In **Fig. 1** stellt eine schematische Seitenansicht einer Fahrzeugkolonne 10 (Platoon) aus miteinander lose oder elektronisch gekoppelten Fahrzeugen gemäß einer bevorzugten Ausführungsform dar. Die Fahrzeugkolonne 10 umfasst ein Führungsfahrzeug 40 als erstes oder vorderstes führendes Fahrzeug sowie weitere Kraftfahrzeuge, ein zweites Kraftfahrzeug 60, ein drittes Kraftfahrzeug 80, ein viertes Kraftfahrzeug 100 und ein fünftes letztes Kraftfahrzeug 120. Statt der dargestellten fünf Kraftfahrzeuge kann die Fahrzeugkolonne 1 auch mehr oder weniger Kraftfahrzeuge umfassen. Die Fahrzeugkolonne 1 fährt hier entlang einer Fahrstrecke. Die fünf Kraftfahrzeuge 40 bis 120 stellen dann jeweils einen Teilnehmer der Fahrzeugkolonne 10 dar. Es sei hier angenommen, dass die Bildung der Fahrzeugkolonne 10, d.h. die Verständigung der Kraftfahrzeuge 40 bis 120 untereinander darüber, dass aus ihnen allen eine lose gekoppelte Fahrzeugkolonne 10 gebildet werden soll, abgeschlossen ist.

Im Ausführungsbeispiel handelt es sich bei den Kraftfahrzeugen 40 bis 120 um schwere Nutzfahrzeuge mit jeweils einer elektrisch steuerbaren und hier beispielsweise als Brennkraftmaschine ausgeführten Antriebsmaschine, einer elektrisch steuerbaren elektro-pneumatischen Betriebsbremseinrichtung, einer elektrisch steuerbaren elektro-pneumatischen Parkbremseinrichtung und einer elektrisch steuerbaren Lenkrichtung.

Die Kraftfahrzeuge oder Teilnehmer 40 bis 120 der Fahrzeugkolonne 10 können Daten über bordfeste Fahrzeug-zu-Fahrzeug-Kommunikationseinrichtung austauschen. Im vorliegenden Fall handelt es sich hierbei um drahtlose Fahrzeug-zu-Fahrzeug-Kommunikationseinrichtungen, bei welcher jedes der Kraftfahrzeuge 40 bis 120 jeweils mit einer Sendeeinrichtung sowie mit einer Empfangseinrichtung ausgestattet ist. Alternativ können die Fahrzeug-zu-Fahrzeug-Kommunikationseinrichtungen auch als Laser- oder Infrarotsende- und Empfangseinrichtung ausgeführt sein.

Zusätzlich kann auch eine drahtlose Fahrzeug-zu-Infrastruktur-Kommunikationseinrichtung vorgesehen sein, welche beispielsweise in jedem der Kraftfahrzeuge oder Teilnehmer 40 bis 120 installiert ist und ebenfalls eine Sendeeinrichtung sowie eine Empfangseinrichtung umfasst. Damit kann jedes der Kraftfahrzeuge 40 bis 120 und insbesondere das Führungsfahrzeug 2 mit einer externen, mobilen oder stationären Infrastruktur kommunizieren.

Jedes der sechs Kraftfahrzeuge 40 bis 120 ist mit einer bekannten Fahrzeug-Folgeregelungseinrichtung ausgestattet, welche einen Längsabstand d der Kraftfahrzeuge 40 bis 120 auf einen bestimmten Wert d einregelt und es ermöglicht, dass die Kraftfahrzeuge 60 bis 120 dem Führungsfahrzeug 40 jeweils durch den Abstand d voneinander beabstandet folgen können. Hierzu sind entsprechende Sensoreinrichtungen in den Kraftfahrzeugen 40 bis 120 verbaut, welche beispielsweise Abstands- und Geschwindigkeitsdaten generieren, welche über die Fahrzeug-zu-Fahrzeug-Kommunikation ausgetauscht werden. Außerdem ist jedes der Kraftfahrzeuge 40 bis 120 mit einem elektronischen Steuergerät ausgestattet, in welchem die Steuer-und Regelroutinen der Fahrzeugfolgeregelung implementiert sind.

Die Fahrzeug-Folgeregelungseinrichtung umfasst daher je Kraftfahrzeug 40 bis 120 eine Sendeeinrichtung und eine Empfangseinrichtung der Fahrzeug-zu-Fahrzeug-Kommunikationseinrichtung, eine Sensoreinrichtung, ein elektronisches Steuergerät sowie wenigstens eine elektrisch steuerbare Antriebsmaschine, eine elektrisch steuerbare Betriebsbremseinrichtung und eine elektrisch steuerbare Lenkrichtung als Aktuatoren.

Aufgrund der Abstands- und Geschwindigkeitsdaten, welche jeweils von dem elektronischen Steuergerät der Fahrzeugfolgeregelung empfangen werden, findet dann im Rahmen der Fahrzeugfolgeregelung eine automatische elektrische Betätigung der elektrischen Lenkeinrichtungen, der elektro-pneumatischen Bremseinrichtungen sowie der elektrisch steuerbaren Antriebsmaschinen jedes in die Fahrzeugkolonne 1 eingegliederten Kraftfahrzeugs 40 bis 120 durch elektrische Stellsignale statt, um einer durch das Führungsfahrzeug 2 vorgegebenen Soll-Trajektorie, gleich beabstandet zu folgen (siehe **Fig.1**).

Weiterhin sind die Fahrzeuge 40 bis 120 und insbesondere das Führungsfahrzeug 40 mit einem eingangs beschriebenen Notbremsassistenten (AEBS) ausgestattet, welcher es erlaubt, dass die Fahrzeuge 40 bis 120 und insbesondere das Führungsfahrzeug 40 ohne Zutun des Fahrers in einer Notbremssituation autonom abgebremst wird. Aufgrund des Notbremsassistenten (AEBS) bremst das Führungsfahrzeug 40 automatisch ab, wenn sich in seiner Fahrtrajektorie ein Hindernis 20 beispielsweise in Form eines externen Kraftfahrzeugs in für die Sicherheit kritischer Weise befindet oder dort hineingerät.

Es wird nun ein Verfahren zum Bewegen der Fahrzeugkolonne 10 vorgeschlagen, bei welchem die Kraftfahrzeuge 40 bis 120 auf Basis einer der Fahrzeugkolonne 10 zugeordneten, vorgebbaren Gesamtbetriebsstrategie zumindest vorübergehend in einem vorgebbaren, gleichbleibenden Längsabstand d zueinander entlang der Fahrstrecke bewegt werden.

Unter der Gesamtstrategie soll hier insbesondere eine Längsregelung der Kraftfahrzeuge 40 bis 120 der Fahrzeugkolonne 10 (Kolonnenregler) berechnet aus den Beschleunigungs-, Geschwindigkeits- und/oder Abstandsmessdaten der einzelnen Kraftfahrzeuge 40 bis 120 der Fahrzeugkolonne 1 verstanden werden, aus denen dann Stellwerte für eine Antriebsmaschine und/oder für eine Bremseinrichtung der einzelnen Kraftfahrzeuge 40 bis 120 der Fahrzeugkolonne 10 bestimmt werden. Durch Eingriffe in die Bremsanlagen und/oder die Antriebsmaschinen der Kraftfahrzeuge 40 bis 120 können dann automatische Längsführungseingriffe erfolgen.

Zu der Gesamtbetriebsstrategie der Fahrzeugkolonne 10 gehört auch ein Verfahren zur Auslösung eines selbsttätigen Notbremsvorgangs bei dem den nachfolgenden Fahrzeugen 60 bis 120 vorausfahrenden, hier beispielsweise eine Fahrzeugkolonne 10 anführenden ersten Fahrzeug 40 zur Vermeidung eines Auffahrens des ersten führenden Fahrzeugs 40 der Fahrzeugkolonne 10 auf ein Hindernis 20, wobei
a) bei dem vorausfahrenden Fahrzeug 40 eine Fahrerwarnung ausgelöst wird, wenn wenigstens eine Warnbedingung erfüllt ist, wobei
b) die Erfüllung der Warnbedingung angibt, dass aufgrund der momentanen Fahrsituation des vorausfahrenden Fahrzeugs 40 relativ zum Hindernis 20 der selbsttätige Notbremsvorgang auszulösen ist, wobei
c) der selbsttätige Notbremsvorgang bei dem vorausfahrenden Fahrzeug 40 erst nach Auslösung der Fahrerwarnung und anschließendem Ablauf einer Warnzeitdauer *tWarning* ausgelöst wird, wobei
d) die Warnzeitdauer *tWarning* als Gesamtwarnzeitdauer eine erste Warnzeitdauer *tWarningSignal* und eine zweite Warnzeitdauer *tPartialBrk* beinhaltet, wobei
e) während der ersten Warnzeitdauer *tWarningSignal* optische und/oder akustische Warnsignale ausgegeben werden und im Rahmen der sich an die erste Warnzeitdauer *tWarningSignal* unmittelbar anschließenden zweiten Warnzeitdauer *tPartialBrk* eine Teilbremsung des ersten führenden Fahrzeugs 40 mit einer Teilbremsverzögerung durchgeführt wird, welche kleiner als eine bei dem selbsttätigen Notbremsvorgang des ersten führenden Fahrzeugs 40 wirkende Notbremsverzögerung ist, wobei
f) bei hier beispielsweise allen nachfolgenden sich noch in einem ungebremsten Zustand befindlichen Fahrzeugen 60 bis 120 der Fahrzeugkolonne 10 frühestens zu einem ersten Zeitpunkt t₁, an welchem die erste Warnzeitdauer *tWarningSignal* bei dem vorausfahrenden Fahrzeug 40 beginnt und spätestens zu einem zweiten Zeitpunkt t₂, an welchem die erste Warnzeitdauer *tWarningSignal* bei dem vorausfahrenden Fahrzeug 40 endet, eine selbsttätige Bremsung eingeleitet wird.

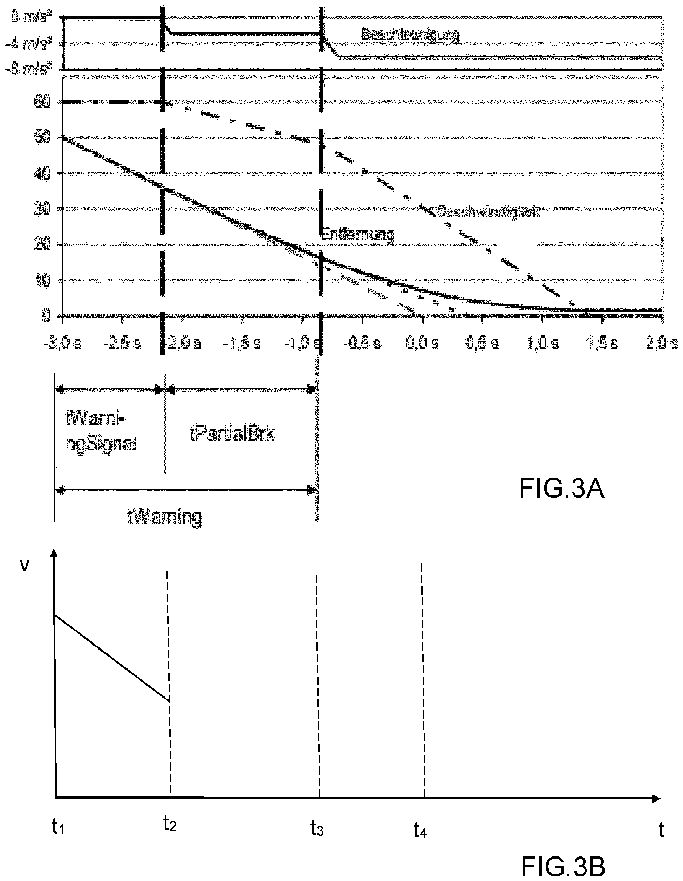

Eine bevorzugte Ausführungsform dieses Verfahren soll nun anhand einem in **Fig. 2** gezeigten Ablaufplan und anhand der Diagramme von **Fig.3A** und **Fig.3B** näher erläutert werden.

Dabei wird dem Fahrer des vorausfahrenden oder die Fahrzeugkolonne 10 anführenden ersten Fahrzeugs 40 innerhalb einer Gesamtwarnzeitdauer *tWarning* durch die Fahrerwarnung z.B. in Form von optischen oder akustischen Signalen Gelegenheit gegeben, das die Fahrzeugkolonne 10 anführende erste Fahrzeug 40 durch einen von ihm selbst initiierten Bremseingriff abzubremsen, ohne dass danach der selbsttätige Notbremsvorgang ausgelöst wird. Versäumt der Fahrer hingegen, innerhalb der Gesamtwarnzeitdauer *tWarning* auf die Fahrerwarnung zu reagieren, so wird der selbsttätige Notbremsvorgang indessen zwingend ausgelöst.

Zunächst wird die momentane Fahrsituation des vorausfahrenden Fahrzeugs, hier beispielsweise des ersten führenden Fahrzeugs 40 der Fahrzeugkolonne 10 und insbesondere eine Relativbewegungssituation in Bezug zu einem Hindernis 20 erfasst, hier beispielsweise in Bezug zu einem dem ersten führenden Fahrzeugs 20 der Fahrzeugkolonne 10 vorausfahrenden Fahrzeug 20. Dazu verfügt das erste führende Fahrzeug 40 der Fahrzeugkolonne 10 über eine Vorrichtung 1 zur Durchführung eines selbsttätigen Notbremsvorgangs, die eine Relativbewegungssituation zwischen dem ersten führenden Fahrzeug 40 und dem Hindernis 20 erfassende Sensoreinrichtung 2 beinhaltet, wobei hier beispielsweise als das erste führende Fahrzeug 40 selbst (ego vehicle) betreffende Größe die Geschwindigkeit vₓ des ersten führenden Fahrzeugs in Fahrtlängsrichtung x und als das Hindernis (obstacle) 20 betreffende Größen der Abstand dx, dy des ersten führenden Fahrzeugs 40 zum Hindernis 20 in Fahrtlängsrichtung x und in Querrichtung y dazu sowie die Relativgeschwindigkeit v_{xRel} in Fahrtrichtung des ersten führenden Fahrzeugs 40 in Bezug zum Hindernis 20 erfasst werden. Diese Größen werden in eine Auswerteeinrichtung 4 eingesteuert.

Weiterhin werden in die Auswerteeinrichtung 4 als vorgegebene Größen (parameters) z.B. aus einem Speicher eine Teilbremsverzögerung a_{xvPartialBraking} in Fahrtrichtung x sowie ein Sicherheitsabstand d_{xSecure} des ersten führenden Fahrzeugs 40 in Bezug zum Hindernis 20 in Fahrtlängsrichtung x eingelesen. Die Teilbremsverzögerung *a_{xvPartialBraking}* im Rahmen einer zweiten Warnstufe einer noch weiter unten erläuterten Fahrerwarnung als beispielsweise vorgegebene Größe verwendet. Der Sicherheitsabstand *d_{xSecure}* des ersten führenden Fahrzeugs 40 in Bezug zum Hindernis 20 in Fahrtlängsrichtung x stellt einen zu erzielenden Abstand dar, welcher entweder durch einen durch den Fahrer selbst eingeleiteten Bremsvorgang und/oder durch einen automatisch ausgelösten Notbremsvorgang zu erzielen ist.

Darüber hinaus wird aus dem bisherigen Verhalten des Hindernisses 20 auf der Basis der durch die Sensoreinrichtung 2 erfassten Größen eine dynamische Gesamtwarnzeitdauer *tWarning* sowie eine beispielsweise dynamische zweite Warnzeitdauer *tPartialBrk* ermittelt. Dynamisch bedeutet, dass die beiden Warnzeitdauern Gesamtwarnzeitdauer *tWarning* und zweite Warnzeitdauer *tPartialBrk* nicht fest vorgegeben, sondern einstell- bzw. anpassbare Größen sind. Auf welcher Grundlage die Einstellung bzw. Anpassung erfolgen kann, wird noch später erläutert.

Während die dynamische Gesamtwarnzeitdauer *tWarning* die gesamte Warnzeitdauer angibt, während welcher der Fahrer Zeit zum Eingreifen hat, stellt die dynamische zweite Warnzeitdauer *tPartialBrk* eine Zeitdauer dar, während welcher die Auswerteeinrichtung 4 ein Signal an eine hier nicht gezeigte Bremseinrichtung sendet, um eine Teilbremsung mit einer Teilbremsverzögerung bei dem ersten führenden Fahrzeug 40 auszulösen, die kleiner als eine maximale Notbremsverzögerung ist, die im Rahmen der automatisch ausgelösten Notbremsvorgangs wirkt.

Wie aus **Fig.2** hervorgeht, ist der zweiten Warnzeitdauer *dynamic tPartialBrk* eine erste Warnzeitdauer *tWarningSignal* zeitlich vorgeordnet, während welcher dem Fahrer mittels eines optischen und/oder akustischen Signals einer von der Auswerteeinrichtung 4 durch ein entsprechendes elektrisches Signal gesteuerten hier nicht gezeigten Signaleinrichtung ein Hinweis gegeben wird, aktiv zu bremsen.

Falls der Fahrer dies innerhalb der ersten Warnzeitdauer *tWarningSignal* in ausreichendem Maße tut, d.h., dass sich aufgrund seines Bremseingriffs wenigstens der

Sicherheitsabstand *d_{xSecure}* des ersten führenden Fahrzeugs 40 in Bezug zum Hindernis 20 in Fahrtlängsrichtung x einstellt, so wird das Verfahren beendet. Falls dies der Fahrer jedoch nicht oder in nicht ausreichendem Maße tut, so wird automatisch die dynamische zweite Warnzeitdauer *tPartialBrk* in Gang gesetzt, während welcher ohne ein Zutun des Fahrers die Auswerteeinrichtung ein Signal an die Bremseinrichtung sendet, um eine Teilbremsung des ersten führenden Fahrzeugs 40 mit der Teilbremsverzögerung auszulösen. Erst wenn der Fahrer auf dieses haptisch erfassbare Signal nicht mit einem ausreichenden Bremseingriff reagiert, dann wird von der Auswerteeinrichtung 4 an die Bremseinrichtung des ersten führenden Fahrzeugs 40 ein Signal gesendet, welches einen Notbremsvorgang mit maximaler Notbremsverzögerung auslöst.

Die dynamische Gesamtwarnzeitdauer *tWarning* setzt sich demnach aus einer ersten Warnzeitdauer *tWarningSignal* und einer dynamischen zweiten Warnzeitdauer *tPartialBrk* zusammen. Ein in die Auswerteeinrichtung integrierter Zeitzähler überwacht den Ablauf der Gesamtwarnzeitdauer *tWarning* bzw. der ersten Warnzeitdauer *tWarningSignal* bzw. der zweiten Warnzeitdauer *tPartialBrk.*

Aus den erfassten Eingangsgrößen bestimmt die Auswerteeinrichtung eine Kollisionsvermeidungsverzögerung *aAvoid,* mit welcher das erste führende Fahrzeug 40 abgebremst werden müsste, um wenigstens den notwendigen Sicherheitsabstand *d_{xSecure}* des ersten führenden Fahrzeugs 40 in Bezug zum Hindernis in Fahrtlängsrichtung x zu erzielen. In einem Vergleicher 6 der Auswerteeinrichtung 4 wird der ermittelte Wert für die Kollisionsvermeidungsverzögerung *aAvoid* mit einer Notbremsverzögerung *axvEmergencyBraking* verglichen, die beispielsweise die Bremseinrichtung des ersten führenden Fahrzeugs 40 maximal aufbringen kann. Die Notbremsverzögerung *axvEmergencyBraking* stellt insbesondere einen fest vorgegebenen Schwellwert dar.

Falls der Vergleicher 6 feststellt, dass der ermittelte Wert für die Kollisionsvermeidungsverzögerung *aAvoid* kleiner oder gleich in Bezug zur Notbremsverzögerung *axvEmergencyBraking* ist, so wird keine Fahrerwarnung in Kombination mit einem automatischen Notbremsvorgang bei dem ersten führenden Fahrzeug 40 ausgelöst. Ist hingegen der ermittelte Wert für die Kollisionsvermeidungsverzögerung *aAvoid* größer als die Notbremsverzögerung *axvEmergencyBraking,* so wird die Fahrerwarnung mit Gesamtwarnzeitdauer *tWarning* eventuell automatisch ausgelöstem Notbremsvorgang in Gang gesetzt (Trigger of AEBS).

Die Auswerteeinrichtung 4 ist weiterhin ausgebildet, dass oben beschriebenen Schritte des Erfassens der Größen, Berechnung, Vergleich etc. in Zyklen oder zyklisch durchlaufen werden, so dass bei aktiviertem Verfahren bzw. bei aktivierter Vorrichtung ständig eine entsprechende Kollisionsüberwachung stattfindet.

Wie oben bereits angedeutet, wird (werden) die Gesamtwarnzeitdauer *tWarning* und/oder die zweite Warnzeitdauer *tPartialBrk* abhängig von der Relativbewegungssituation zwischen dem ersten führenden Fahrzeug 40 und dem Hindernis 20 dynamisch eingestellt und/oder abhängig von einer sich zeitlich ändernden Relativbewegungssituation zwischen dem ersten führenden Fahrzeug 40 und dem Hindernis 20 dynamisch angepasst.

Einstellung der Gesamtwarnzeitdauer *tWarning* und/oder der zweiten Warnzeitdauer *tPartialBrk* bedeutet, dass diese Größe(n) auf der Basis der zum Zeitpunkt des festgestellten Ergebnisses des im Vergleicher 6 angestellten Vergleichs, dass die Kollisionsvermeidungsverzögerung *aAvoid* größer als die Notbremsverzögerung *axvEmergencyBraking* ist vorliegenden Relativbewegungssituation zwischen dem ersten führende Fahrzeug 40 und dem Hindernis 20 eingestellt wird (werden).

Falls beispielsweise das Hindernis 20 für eine gewisse Zeitdauer vor dem ersten führenden Fahrzeug 40 in einem Abstand herfährt, der keinerlei Eingriff seitens der Auswerteeinrichtung erfordert, d.h. es ist kein selbsttätiger Notbremsvorgang in Kombination mit vorangehender Warnzeit notwendig, so wird dennoch eine (dann theoretische) Gesamtwarnzeitdauer *tWarning* und/oder zweite Warnzeitdauer *tPartialBrk* als Ausgangswert(e) bestimmt.

Falls dann nach einer gewissen Zeitdauer das Hindernis 20 verzögert, dann wird (werden) die Gesamtwarnzeitdauer *tWarning* und/oder zweite Warnzeitdauer *tPartialBrk* auf der Basis der dann veränderten Relativbewegungssituation zwischen dem ersten führenden Fahrzeug 40 und dem Hindernis 20 gegenüber dem (den) Ausgangswert(en) verkürzt. Im Gegensatz dazu wird (werden) beispielsweise die Gesamtwarnzeitdauer *tWarning* und/oder zweite Warnzeitdauer *tPartialBrk* verlängert, wenn das Hindernis 20 beschleunigt.

Die zu dem Zeitpunkt, zu dem festgestellt wird, dass die Kollisionsvermeidungsverzögerung *aAvoid* größer als die Notbremsverzögerung *axvEmergencyBraking* ist ermittelten oder angepassten Werte für die Gesamtwarnzeitdauer *tWarning* und/oder für die zweite Warnzeitdauer *tPartialBrk* werden dann im Rahmen der sich unmittelbar anschließenden Phase der ausgelösten Fahrerwarnung beispielsweise beibehalten.

Gemäß einer alternativen Vorgehensweise kann vorgesehen sein, dass ausgehend von Anfangswerten für Gesamtwarnzeitdauer *tWarning* und/oder für die zweite Warnzeitdauer *tPartialBrk,* die zum Zeitpunkt des Auslösens der Fahrerwarnung vorgegeben sind oder erst auf der Basis der zu diesem Zeitpunkt vorliegenden Relativbewegungssituation zwischen dem ersten führenden Fahrzeug 40 und dem Hindernis 20 eingestellt werden, die Werte für die Gesamtwarnzeitdauer *tWarning* und/oder für die zweite Warnzeitdauer *tPartialBrk* auch nach bereits erfolgter Auslösung der Fahrerwarnung abhängig von der dann jeweils vorliegenden Relativbewegungssituation zwischen dem ersten führenden Fahrzeug 40 und dem Hindernis 20 angepasst werden. Eine solche Anpassung kann insbesondere einmalig oder in bestimmten Zeitabständen oder zyklisch mehrmalig erfolgen.

Wenn werden beispielsweise für den Fall, dass nach Auslösung der Fahrerwarnung das Hindernis 20 verzögert, die Werte für die Gesamtwarnzeitdauer *tWarning* und/oder für die zweite Warnzeitdauer *tPartialBrk* auf der Basis der dann vorliegenden und veränderten Relativbewegungssituation zwischen dem ersten führenden Fahrzeug 40 und dem Hindernis 20 gegenüber der Anfangswerte zum Zeitpunkt der Auslösung der Fahrerwarnung verkürzt. Andernfalls, also wenn nach Auslösung der Fahrerwarnung das Hindernis 20 beschleunigt, so werden die Werte für die Gesamtwarnzeitdauer *tWarning* und/oder für die zweite Warnzeitdauer *tPartialBrk* auf der Basis der dann vorliegenden und veränderten Relativbewegungssituation zwischen dem ersten führenden Fahrzeug 40 und dem Hindernis 20 gegenüber den Anfangswerten zu Beginn der Auslösung der Fahrerwarnung verlängert.

In **Fig.3A** ist der Abstand (Entfernung) des ersten führenden Fahrzeugs 40 zum Hindernis 20 in durchgezogener Linie, die Eigengeschwindigkeit (Geschwindigkeit) des ersten führenden Fahrzeugs 40 in strichpunktierter Linie und die Beschleunigung des ersten führenden Fahrzeugs 40 ebenfalls in durchgezogener Linie dargestellt.

Wenn man auf das Beispiel von **Fig.3A** bezogen davon ausgeht, dass ausgehend von einer Fahrt des ersten führenden Fahrzeugs 40 mit konstanter Geschwindigkeit von z.B. v₁ = 60 km/h ohne Beschleunigung (a₁ = 0 m/s²) zu einem ersten Zeitpunkt t₁ = -3,0 s von der Auswerteeinrichtung festgestellt wurde, dass z.B. aufgrund eines verzögernden vorausfahrenden Hindernisses 20 (siehe **Fig.1**) der ermittelte Wert für die Kollisionsvermeidungsverzögerung *aAvoid* größer als die Notbremsverzögerung *axvEmergencyBraking* wird, so wird die Fahrerwarnung evtl. auch mit automatisch ausgelöstem Notbremsvorgang in Gang gesetzt.

Anhand der zu diesem ersten Zeitpunkt t₁ vorliegenden und anhand der Sensoreinrichtung erfassten Relativbewegungssituation zwischen dem ersten führenden Fahrzeug 40 und dem Hindernis 20 wird dann hier beispielsweise die Gesamtwarnzeitdauer *tWarning* für die Fahrerwarnung ermittelt und mittels eines in die Auswerteeinrichtung integrierten Zeitzählers überwacht. Wenn dann hier beispielsweise der Abstand (Entfernung) zum Hindernis 20 weiter abnimmt, z.B., weil dieses weiter verzögert wird und der Fahrer des ersten führenden Fahrzeugs 40 während der ersten Warnzeitdauer *tWarningSignal* nicht auf die von der Auswerteeinrichtung initiierten und von der Signaleinrichtung ausgegebenen optischen und/oder akustischen Signale reagiert, so bleiben die Geschwindigkeit und die Beschleunigung des ersten führenden Fahrzeugs 40 während dieser Zeitphase (Warnphase) unverändert.

Wenn nach Ablauf der ersten Warnzeitdauer *tWarningSignal* zu einem zweiten Zeitpunkt t₂ = -1,8 s noch kein Bremseingriff seitens des Fahrers des ersten führenden Fahrzeugs 40 erfolgt ist, so greift die Auswerteeinrichtung etwa zum zweiten Zeitpunkt t₂ = -1,8 s (Beginn der zweiten Warnzeitdauer tPartialBrk) oder kurz danach durch eine von ihr initiierte Teilbremsung ein, wodurch die Geschwindigkeit und der Abstand zum Hindernis 20 reduziert werden. Weiterhin erfährt das erste führende Fahrzeug 40 während der zweiten Warnzeitdauer *tPartialBrk* eine gewisse Teilbremsverzögerung von beispielsweise - 2 m/s².

Wenn dann nach Ablauf der zweiten Warnzeitdauer tPartialBrk zu einem dritten Zeitpunkt t₃ immer noch kein Bremseingriff seitens des Fahrers des ersten führenden Fahrzeugs 40 erfolgt ist, so greift die Auswerteeinrichtung zum dritten Zeitpunkt t₃ = - 0,8 s (Beginn des automatischen Notbremsvorgangs) durch eine von ihr initiierte Vollbremsung ein, wodurch die Geschwindigkeit und der Abstand zum Hindernis 20 noch weiter reduziert werden, bis etwa zu einem vierten Zeitpunkt t₄ = 0,0 s ein geringfügiger zu erzielender Mindestabstand zum Hindernis 20 erreicht ist. Weiterhin erfährt das Fahrzeug während der zweiten Warnzeitdauer *tPartialBrk* eine Vollbremsverzögerung von beispielsweise -6 m/s².

Bei dem anhand von **Fig.2** und **Fig.3A** erläuterten Ausführungsbeispiel des Verfahrens wird zu dem ersten Zeitpunkt t₁ = -3,0 s, zu dem festgestellt wird, dass die Kollisionsvermeidungsverzögerung *aAvoid* größer als die Notbremsverzögerung *axvEmergencyBraking* ist, ein der zu diesem ersten Zeitpunkt t₁ vorliegenden Relativbewegungssituation zwischen dem ersten führenden Fahrzeug 40 und dem Hindernis 20 entsprechender Wert für die Gesamtwarnzeitdauer *tWarning₀* festgelegt und dann im Rahmen der sich unmittelbar anschließenden Phase der ausgelösten Fahrerwarnung vorzugsweise beibehalten.

Alternativ hierzu könnte auch der Wert für die Gesamtwarnzeitdauer *tWarning* auch noch erfolgter Auslösung der Fahrerwarnung zum ersten Zeitpunkt t₁ = -3,0 s an die laufende bzw. sich demgegenüber ändernde Relativbewegungssituation zwischen dem ersten führenden Fahrzeug 40 und dem Hindernis 20 durch die Auswerteeinrichtung 4 angepasst werden, z.B. wenn das Hindernis 20 während der laufenden Gesamtwarnzeitdauer *tWarning* etwa noch weiter verzögert oder beschleunigt wird. Im ersten Fall kann dann die Gesamtwarnzeitdauer *tWarning* von der Auswerteeinrichtung 4 verkürzt und im zweiten Fall verlängert werden. Die Anpassung kann dabei in beliebiger Weise erfolgen, also proportional oder auch nicht linear.

Bei den nachfolgenden sich kurz vor dem ersten Zeitpunkt t₁ = -3,0 s noch in einem ungebremsten Zustand befindlichen Fahrzeugen 60 bis 120 wird beispielsweise an dem ersten Zeitpunkt t₁ = -3,0 s, an welchem die erste Warnzeitdauer *tWarningSignal* bei dem ersten führenden Fahrzeug 40 beginnt, jeweils eine selbsttätige Bremsung eingeleitet.

Dabei wird nicht nur ein Lüftspiel der Bremsaktuatoren der nachfolgenden Fahrzeuge 60 bis 120 überwunden, sondern diese Einleitung einer Bremsung zieht bei den Bremsaktuatoren jeweils den Aufbau einer wirksamen Bremskraft nach sich, welche in der Lage ist, die nachfolgenden Fahrzeuge 60 bis 120 zu verzögern. Das Einleiten der Bremsung schließt daher einen gleichzeitigen oder nachfolgenden Aufbau von Bremskräften ein.

Mit anderen Worten wird hier beispielsweise bei allen nachfolgenden Fahrzeugen 60 bis 120 bereits eine selbsttätige Bremsung ausgelöst bzw. vorgenommen, wenn die erste Warnzeitdauer *tWarningSignal* bei dem ersten führenden Fahrzeug 40 gerade beginnt oder begonnen hat aber noch nicht abgelaufen ist. Während der ersten Warnzeitdauer *tWarningSignal* wird bei dem ersten führenden Fahrzeug 40 zwar noch keine Teilbremsung eingeleitet, aber es werden optische und/oder akustische Warnsignale für den Fahrer ausgegeben, damit dieser veranlasst wird, die Bremse zu betätigen und dadurch die Teilbremsung abzubrechen und/oder eine Einleitung des selbsttätigen Notbremsvorgangs vermieden wird.

Vorzugsweise wird der Beginn der ersten Warnzeitdauer *tWarningSignal* zum ersten Zeitpunkt t₁ bei dem ersten führenden Fahrzeug 40 von dem ersten führenden Fahrzeug 40 zu den nachfolgenden Fahrzeugen 60 bis 120 jeweils mittels der Fahrzeug-zu-Fahrzeug-Kommunikation übermittelt.

Weiterhin bevorzugt wird bei den nachfolgenden Fahrzeugen 60 bis 120 als selbsttätige Bremsung eine Teilbremsung mit einer Teilbremsverzögerung eingeleitet oder durchgeführt, welche jeweils kleiner ist als eine maximal mögliche Notbremsverzögerung der nachfolgenden Fahrzeuge 60 bis 120.

Dies hat den positiven Effekt, dass etwaige Signallauf- und Reaktionszeiten, welche beispielsweise bei einer zwischen dem ersten führenden Fahrzeug 40 und den nachfolgenden Fahrzeugen 60 bis 120 aktiven Fahrzeugnachfolgeregelung stets herrschen, kompensiert werden können, was das Kollisionsrisiko zwischen den Fahrzeugen 40 bis 120 der Fahrzeugkolonne 10 senkt. Dann besteht auch die Möglichkeit, die im Rahmen des Notbremsassistenten (AEBS) des ersten führenden Fahrzeugs 40 durchgeführte Teilbremsung und/oder auch die Notbremsung innerhalb des Notbremsvorgangs mit einer jeweils höheren Verzögerung durchzuführen, was das das Kollisionsrisiko zwischen dem ersten führenden Fahrzeug 40 und dem Hindernis 20 senkt.

Zur Veranschaulichung ist in **Fig.3B** die Eigengeschwindigkeit v z.B. des dem ersten führenden Fahrzeug 40 unmittelbar nachfolgenden Fahrzeugs 60 über der Zeit in einem Diagramm in durchgezogener Linie dargestellt. Demzufolge wird bei dem nachfolgenden Fahrzeug 60 beispielsweise bereits zum ersten Zeitpunkt t₁ = -3,0 s, an welchem die erste Warnzeitdauer *tWarningSignal* bei dem ersten führenden Fahrzeug 40 beginnt, bereits die Teilbremsung eingeleitet, welche dazu führt, dass Bremskräfte aufgebaut werden und sich die Eigengeschwindigkeit v des nachfolgenden Fahrzeugs 60 reduziert.

Beispielsweise wird die elektronische Kopplung der Fahrzeuge 40 bis 120 der Fahrzeugkolonne 10 aufgelöst, wenn die erste Warnzeitdauer *tWarningSignal* bei dem ersten führenden Fahrzeug 40 zum zweiten Zeitpunkt t₂ abgelaufen ist und wenn bei den nachfolgenden Fahrzeugen 60 bis 120 eine selbsttätige Bremsung (tatsächlich) eingeleitet worden ist.

Bei dem vorausfahrenden Fahrzeug muss es sich allerdings nicht um das erste führende Fahrzeug 40 der Fahrzeugkolonne handeln, es könnte auch durch eines der weiteren Fahrzeuge 60 bis 120 innerhalb der Fahrzeugkolonne 10 gebildet werden, wobei dann beispielsweise das Hindernis 20 in Form eines externen Fahrzeugs versucht, in die Fahrzeugkolonne einzudringen (Intruder) und dadurch den Ablauf des Verfahrens auslöst. Bevorzugt verfügt daher jedes der Fahrzeuge 40 bis 120 über einen Notbremsassistenten der oben beschriebenen Art, so dass jedes dieser Fahrzeuge 40 bis 120 ein "vorausfahrendes Fahrzeug" im Sinne dieser Anmeldung bilden kann.

Selbstverständlich ist das Verfahren auch nicht darauf beschränkt, dass das vorausfahrende Fahrzeug 40 und die diesem nachfolgenden Fahrzeuge 60 bis 120 wie hier in eine elektronisch gekoppelte Fahrzeugkolonne 10 eingebunden sind. Vielmehr können sich die Fahrzeuge 40 bis 120 auch losgelöst von einer Fahrzeugkolonne 10 bewegen und dann nach dem oben beschriebenen Verfahren gesteuert werden.

Weiterhin kann beispielsweise auch anstatt wie hier beschrieben bei allen nachfolgenden Fahrzeugen 60 bis 120 auch nur bei einem oder einigen dieser nachfolgenden Fahrzeuge 60 bis 120 der Fahrzeugkolonne 10 an dem ersten Zeitpunkt t₁ = -3,0 s, an welchem die erste Warnzeitdauer *tWarningSignal* bei dem ersten führenden Fahrzeug 40 beginnt, eine selbsttätige Bremsung eingeleitet werden.

### Bezugszeichenliste

- 1: Vorrichtung
- 2: Sensoreinrichtung
- 4: Auswerteeinrichtung
- 6: Vergleicher
- 10: Fahrzeugkolonne
- 20: Hindernis
- 40: erstes führendes Fahrzeug
- 60: zweites Fahrzeug
- 80: drittes Fahrzeug
- 100: viertes Fahrzeug
- 120: fünftes Fahrzeug

## Patentansprüche

1. Verfahren zur Auslösung eines selbsttätigen Notbremsvorgangs bei einem wenigstens einem nachfolgenden Fahrzeug (60 bis 120) vorausfahrenden Fahrzeug (40) zur Vermeidung eines Auffahrens des vorausfahrenden Fahrzeugs (40) auf ein Hindernis (20) und zur Einleitung einer selbsttätigen Bremsung bei dem wenigstens einen nachfolgenden Fahrzeug (60 bis 120) zum Senken des Kollisionsrisikos zwischen dem vorausfahrenden Fahrzeug (40) und dem wenigstens einen nachfolgenden Fahrzeug (60 bis 120), wobei
a) bei dem vorausfahrenden Fahrzeug (40) eine Fahrerwarnung ausgelöst wird, wenn wenigstens eine Warnbedingung erfüllt ist, wobei
b) die Erfüllung der Warnbedingung angibt, dass aufgrund der momentanen Fahrsituation des vorausfahrenden Fahrzeugs (40) relativ zum Hindernis (20) der selbsttätige Notbremsvorgang auszulösen ist, wobei
c) der selbsttätige Notbremsvorgang bei dem vorausfahrenden Fahrzeug (40) erst nach Auslösung der Fahrerwarnung und anschließendem Ablauf einer Warnzeitdauer (tWarning) ausgelöst wird, wobei
d) die Warnzeitdauer (tWarning) als Gesamtwarnzeitdauer eine erste Warnzeitdauer (tWarningSignal) und eine zweite Warnzeitdauer (tPartialBrk) beinhaltet, wobei
e) während der ersten Warnzeitdauer (tWarningSignal) optische und/oder akustische Warnsignale ausgegeben werden und im Rahmen der sich an die erste Warnzeitdauer (tWarningSignal) unmittelbar anschließenden zweiten Warnzeitdauer (tPartialBrk) eine Teilbremsung des vorausfahrenden Fahrzeugs (40) mit einer Teilbremsverzögerung durchgeführt wird, welche kleiner als eine bei dem selbsttätigen Notbremsvorgang des vorausfahrenden Fahrzeugs (40) wirkende Notbremsverzögerung ist, **dadurch gekennzeichnet, dass**
f) bei dem wenigstens einen nachfolgenden sich noch in einem ungebremsten Zustand befindlichen Fahrzeug (60 bis 120) frühestens zu einem ersten Zeitpunkt (t₁), an welchem die erste Warnzeitdauer (tWarningSignal) bei dem vorausfahrenden Fahrzeug (40) beginnt und spätestens zu einem zweiten Zeitpunkt (t₂), an welchem die erste Warnzeitdauer (tWarningSignal) bei dem vorausfahrenden Fahrzeug (40) endet, die selbsttätige Bremsung eingeleitet wird, wobei
g) bei dem wenigstens einen nachfolgenden Fahrzeug (60) als selbsttätige Bremsung eine Teilbremsung mit einer Teilbremsverzögerung eingeleitet wird, welche kleiner als eine maximal mögliche Notbremsverzögerung des wenigstens einen nachfolgenden Fahrzeugs (60) ist.

2. Verfahren nach Anspruch 1, **dadurch gekennzeichnet, dass** bei dem wenigstens einen nachfolgenden Fahrzeug (60) die eingeleitete selbsttätige Bremsung mit Ablauf der ersten Warnzeitdauer (tWarningSignal) bei dem vorausfahrenden Fahrzeug (40) abgebrochen wird.

3. Verfahren nach einem der vorhergehenden Ansprüche, **dadurch gekennzeichnet, dass** der Beginn der ersten Warnzeitdauer (tWarningSignal) oder der erste Zeitpunkt bei dem vorausfahrenden Fahrzeug (40) und/oder der Ablauf der ersten Warnzeitdauer (tWarningSignal) oder der zweite Zeitpunkt bei dem vorausfahrenden Fahrzeug (40) von dem vorausfahrenden Fahrzeug (40) zu dem wenigstens einen nachfolgenden Fahrzeug (60 bis 120) mittels einer Fahrzeug-zu-Fahrzeug-Kommunikation übermittelt wird.

4. Verfahren nach einem der vorhergehenden Ansprüche, **dadurch gekennzeichnet, dass** das vorausfahrende Fahrzeug (40) und das wenigstens eine nachfolgende Fahrzeug (60 bis 120) zusammen eine ungekoppelte oder eine elektronisch gekoppelte Fahrzeugkolonne (10) bilden und dass die Fahrzeuge (40 bis 120) der Fahrzeugkolonne (10) auf Basis einer der Fahrzeugkolonne (10) zugeordneten, vorgebbaren Gesamtbetriebsstrategie zumindest vorübergehend in einem vorgebbaren, gleichbleibenden Längsabstand (d) zueinander entlang einer Fahrstrecke bewegt werden.

5. Verfahren nach Anspruch 4, **dadurch gekennzeichnet, dass** die elektronische Kopplung der Fahrzeuge (40 bis 120) der Fahrzeugkolonne (10) aufgelöst wird, wenn die erste Warnzeitdauer (tWarningSignal) bei dem vorausfahrenden Fahrzeug (40) abgelaufen und bei dem wenigstens einen nachfolgenden Fahrzeug (60 bis 120) eine selbsttätige Bremsung eingeleitet worden ist.

6. Verfahren nach Anspruch 4 oder 5, **dadurch gekennzeichnet, dass** das vorausfahrende Fahrzeug (40) ein führendes Fahrzeug der Fahrzeugkolonne (10) oder ein Fahrzeug (60 bis 120) innerhalb der Fahrzeugkolonne (10) ist.

7. Verfahren nach Anspruch 6, **dadurch gekennzeichnet, dass** das Hindernis (20) durch ein in Fahrtrichtung der Fahrzeugkolonne (10) gesehen vor dem führenden Fahrzeug (40) der Fahrzeugkolonne (10) befindliches, stationäres oder bewegliches Objekt oder Fahrzeug gebildet wird, oder durch ein vor dem vorausfahrenden Fahrzeug (40) in die Fahrzeugkolonne (10) einscherendes Objekt oder Fahrzeug.

8. Verfahren nach einem der vorhergehenden Ansprüche, **dadurch gekennzeichnet, dass** bei dem vorausfahrenden Fahrzeug (40) die Warnzeitdauer (tWarning) abhängig von einer Relativbewegungssituation zwischen dem vorausfahrenden Fahrzeug und dem Hindernis (20) eingestellt und/oder abhängig von einer sich zeitlich ändernden Relativbewegungssituation zwischen dem vorausfahrenden Fahrzeug (40) und dem Hindernis (20) angepasst wird.

9. Verfahren nach Anspruch 8, **dadurch gekennzeichnet, dass** bei der Relativbewegungssituation zwischen dem vorausfahrenden Fahrzeug (40) und dem Hindernis (20) wenigstens eine der folgenden Größen berücksichtigt wird: Die Geschwindigkeit und/oder die Beschleunigung des vorausfahrenden Fahrzeugs (40) in Fahrtrichtung und/oder quer zur Fahrtrichtung, die Geschwindigkeit und/oder die Beschleunigung des Hindernisses (20) in Fahrtrichtung und/oder quer zur Fahrtrichtung, die Relativgeschwindigkeit und/oder die Relativbeschleunigung zwischen dem vorausfahrenden Fahrzeug (40) und dem Hindernis (20) in Fahrtrichtung und/oder quer zur Fahrtrichtung, der Abstand zwischen dem vorausfahrenden Fahrzeug (40) und dem Hindernis (20).

10. Verfahren nach einem der vorhergehenden Ansprüche, **dadurch gekennzeichnet, dass** falls der Fahrer des vorausfahrenden Fahrzeugs (40) innerhalb der Warnzeitdauer (tWarning) eine Bremsung des vorausfahrenden Fahrzeugs (40) auslöst, die selbsttätige Teilbremsung und/oder der selbsttätige Notbremsvorgang nicht ausgelöst wird.

11. Lose gekoppelte oder ungekoppelte Fahrzeugkolonne (10) aus einem vorausfahrenden Fahrzeug (40) und wenigstens einem diesem nachfolgenden Fahrzeug (60 bis 120), wobei die Fahrzeugkolonne nach einem Verfahren gemäß einem der vorhergehenden Ansprüche gesteuert ist.

## Claims

1. Method for initiating an automatic emergency braking process in a vehicle (40) driving ahead of at least one following vehicle (60 to 120) in order to prevent the leading vehicle (40) from running into an obstacle (20) and to initiate an automatic braking process in the at least one following vehicle (60 to 120) in order to reduce the risk of collision between the leading vehicle (40) and the at least one following vehicle (60 to 120), wherein
a) in the leading vehicle (40) a driver's warning is emitted when at least one warning condition is fulfilled, wherein
b) the fulfilment of the warning condition indicates that owing to the instantaneous driving situation of the leading vehicle (40) relative to the obstacle (20), the emergency braking operation must be initiated, wherein
c) the automatic emergency braking process is only initiated in the leading vehicle (40) after the driver's warning has been emitted and a warning time (tWarning) has then lapsed, wherein
d) as the total warning time, the warning time comprises a first warning period (tWarning-Signal) and a second warning period (tPartialBrk),
e) during the first warning period (tWamingSignal) visual and/or acoustic warning signals are emitted, and during the second warning period (tPartialBrk) that follows immediately after the first warning period (tWamingSignal) a partial braking of the leading vehicle (40) with a partial braking deceleration is carried out, which is less severe than an emergency braking deceleration of the leading vehicle (40) that takes place during the automatic emergency braking process, **characterised in that**
f) in the at least one following vehicle (60 to 120) which is still in an un-braked condition, at the earliest at a first time point (ti) at which the first warning period (tWamingSignal) begins in the leading vehicle (40) and at the latest at a second time point (t₂) at which the first warning period (tWamingSignal) ends in the leading vehicle (40), the automatic braking process is initiated, wherein
g) in the at least one following vehicle (60), as the automatic braking a partial braking operation with a partial braking deceleration is initiated, which is less than a maximum possible emergency deceleration of the at least one following vehicle (60).

2. Method according to Claim 1, **characterised in that** in the at least one following vehicle (60) the automatic braking process initiated is interrupted when the first warning period (tWarningSignal) lapses in the leading vehicle (40).

3. Method according to either of the preceding claims, **characterised in that** the beginning of the first warning period (tWarningSignal) in the leading vehicle (40) or the first time point, and/or the lapse of the first warning period in the leading vehicle (40) or the second time point, is transmitted by the leading vehicle (40) to the at least one following vehicle (60 to 120) by means of a vehicle-to-vehicle communication system.

4. Method according to any of the preceding claims, **characterised in that** the leading vehicle (40) and the at least one following vehicle (60 to 120) together form an uncoupled or an electronically coupled column of vehicles (10), and the vehicles (40 to 120) in the said vehicle column (10) move along a driving route a specifiable constant distance apart from one another, at least temporarily, on the basis of a specifiable overall operational strategy associated with the vehicle column (10).

5. Method according to Claim 4, **characterised in that** the electronic coupling of the vehicles (40 to 120) in the vehicle column (10) is initiated when the first warning period (tWarningSignal) in the leading vehicle (40) has lapsed and in the at least one following vehicle (60 to 120) an automatic braking operation has been initiated.

6. Method according to Claims 4 or 5, **characterised in that** the leading vehicle (40) is a vehicle at the head of the vehicle column (10) or is a vehicle (60 to 120) within the vehicle column (10).

7. Method according to Claim 6, **characterised in that** the obstacle (20) consists of a stationary or moving object or vehicle which, as viewed in the travel direction of the vehicle column (10), is ahead of the leading vehicle (40) of the vehicle column (10), or an object or vehicle that cuts in ahead of the leading vehicle (40) in the vehicle column (10).

8. Method according to any of the preceding claims, **characterised in that** in the leading vehicle (40) the warning time (tWarning) is adjusted as a function of a relative movement situation between the leading vehicle and the obstacle (20), and/or it is adapted as a function of a relative movement situation between the leading vehicle and the obstacle (20) that varies with time.

9. Method according to Claim 8, **characterised in that** in defining the relative movement situation between the leading vehicle and the obstacle (20), at least one of the following variables is taken into account: the speed and/or the acceleration of the leading vehicle (40) in the travel direction and/or transversely to the travel direction, the speed and/or the acceleration of the obstacle (20) in the travel direction and/or transversely to the travel direction, the relative speed and/or relative acceleration between the leading vehicle (40) and the obstacle (20) in the travel direction and/or transversely to the travel direction, the distance between the leading vehicle (40) and the obstacle (20).

10. Method according to any of the preceding claims, **characterised in that** if the driver of the leading vehicle (40) initiates a braking operation of the leading vehicle (40) within the warning time (tWarning), the automatic partial braking process and/or the automatic emergency braking process is initiated.

11. Loosely coupled or uncoupled vehicle column (10) consisting of a leading vehicle (40) and at least one vehicle (60 to 120) following it, wherein the vehicle column is controlled in accordance with a method according to any of the preceding claims.

## Revendications

1. Procédé de déclenchement d'une opération automatique de freinage d'urgence d'un véhicule (40) précédent au moins un véhicule (60 à 120) suivant pour empêcher que le véhicule (40) précédent ne tamponne un obstacle (20) et pour faire débuter un freinage automatique du au moins un véhicule (60 à 120) suivant, pour diminuer le danger de collision entre le véhicule (40) précédent et le au moins un véhicule (60 à 120) suivant, dans lequel
a) on déclenche dans le véhicule (40) précédent un avertissement au conducteur, si au moins une condition d'avertissement est satisfaite, dans lequel,
b) la satisfaction de la condition d'avertissement indique que, en raison de la situation de marche instantanée du véhicule (40) précédent par rapport à l'obstacle (20), il faut déclencher l'opération automatique de freinage d'urgence, dans lequel
c) on déclenche l'opération automatique de freinage d'urgence du véhicule (40) précédent seulement après le déclenchement de l'avertissement au conducteur et écoulement ensuite d'une durée (tWarning) d'avertissement, dans lequel
d) la durée (tWarning) d'avertissement comporte comme durée d'avertissement d'ensemble, une première durée (tWarningSignal) d'avertissement et une deuxième durée (tPartialBrk) d'avertissement, dans lequel
e) pendant la première durée (tWarningSignal) d'avertissement, on émet des signaux optiques et/ou acoustiques d'avertissement et, dans le cadre de la deuxième durée (tPartialBrk) d'avertissement suivant immédiatement la première durée (tWarningSignal) d'avertissement, on effectue un freinage partiel du véhicule (40) précédent avec une temporisation partielle de freinage, qui est plus petite qu'une temporisation de freinage d'urgence s'appliquant lors de l'opération automatique de freinage d'urgence du véhicule (40) précédent, **caractérisé en ce que**
f) dans le au moins un véhicule (60 à 120) suivant se trouvant à l'état encore non freiné, on fait commencer le freinage automatique au plus tôt à un premier instant (t₁), où la première durée (tWarningSignal) d'avertissement débute dans le véhicule (40) précédent et au plus tard à un deuxième instant (t2), où la première durée (tWarningSignal) d'avertissement se termine dans le véhicule (40) précédent, dans lequel
g) dans le au moins un véhicule (60) suivant, on fait débuter comme freinage automatique un freinage partiel avec une temporisation de freinage partiel, qui est plus petite qu'une temporisation de freinage d'urgence possible au maximum du au moins un véhicule (60) suivant.

2. Procédé suivant la revendication 1, dans lequel, dans le au moins un véhicule (60) suivant, on interrompt le freinage automatique commencé à l'expiration de la première durée (tWarningSignal) d'avertissement dans le véhicule (40) précédent.

3. Procédé suivant l'une des revendications précédentes, **caractérisé en ce que** l'on transmet du véhicule (40) précédent au au moins un véhicule (60 à 120) suivant, au moyen d'une communication de véhicule à véhicule, le début de la première durée (tWarningSignal) d'avertissement ou le premier instant dans le véhicule (40) précédent et/ou l'expiration de la première durée (tWarningSignal) dans le véhicule (40) précédent ou le deuxième instant dans le véhicule (40) précédent.

4. Procédé suivant l'une des revendications précédentes, **caractérisé en ce que** le véhicule (40) précédent et le au moins un véhicule (60 à 120) suivant forment ensemble une colonne (10) de véhicules découplée ou couplée électroniquement et **en ce que** l'on déplace les véhicules (40 à 120) de la colonne (10) de véhicules, sur la base d'une stratégie de fonctionnement d'ensemble, affectée à la colonne (10) de véhicules et pouvant être donnée à l'avance, au moins transitoirement, à une distance (d) longitudinale pouvant être donnée à l'avance et restant constante, les uns par rapport aux autres le long d'une voie de circulation.

5. Procédé suivant la revendication 4, **caractérisé en ce que** l'on fait cesser le couplage électronique des véhicules (40 à 120) de la colonne (10) de véhicules lorsque la première durée (tWarningSignal) d'avertissement s'est écoulée dans le véhicule (40) précédent et on a fait débuter un freinage automatique dans le au moins un véhicule (60 à 120) suivant.

6. Procédé suivant la revendication 4 ou 5, **caractérisé en ce que** le véhicule (40) précédent est un véhicule menant de la colonne (10) de véhicules (60 à 120) au sein de la colonne (10) de véhicules.

7. Procédé suivant la revendication 6, **caractérisé en ce que** l'obstacle (20) est formé d'un objet ou d'un véhicule fixe ou mobile, se trouvant avant le véhicule (40) menant de la colonne (10) de véhicules, considéré dans le sens de la circulation de la colonne (10) de véhicules, ou par un objet ou un véhicule s'insérant dans la colonne (10) de véhicules avant la véhicule (10) précédent.

8. Procédé suivant l'une des revendications précédentes, **caractérisé en ce que** l'on règle, dans le véhicule (40) précédent, la durée (tWarning) d'avertissement en fonction d'une situation de déplacement relative entre les véhicules précédents et l'obstacle (20) et/ou on l'adapte en fonction d'une situation de déplacement relative se modifiant dans le temps, entre le véhicule (40) précédent et l'obstacle (20).

9. Procédé suivant la revendication 8, **caractérisé en ce que** dans la situation de déplacement relatif entre le véhicule (40) précédent et l'obstacle (20), on prend en compte au moins l'une des grandeurs suivantes : la vitesse et/ou l'accélération du véhicule (40) précédent dans le sens de circulation et/ou transversalement au sens de circulation, la vitesse et/ou l'accélération de l'obstacle (20) dans le sens de circulation et/ou transversalement au sens de circulation, la vitesse relative et/ou l'accélération relative entre le véhicule (40) précédent et l'obstacle (20) dans le sens de circulation et/ou transversalement au sens de circulation, la distance entre le véhicule (40) précédent et l'obstacle (20).

10. Procédé suivant l'une des revendications précédentes, **caractérisé en ce que** si le conducteur du véhicule (40) déclenche, dans la durée (tWarning) d'avertissement un freinage du véhicule (40) précédent, on ne déclenche pas le freinage partiel automatique et/ou l'opération automatique de freinage d'urgence.

11. Colonne (10) de véhicules couplée de manière lâche ou découplée, composée d'un véhicule (40) précédent et d'au moins un véhicule (60 à 120) suivant celui-ci, la colonne de véhicules étant commandée par un procédé suivant l'une des revendications précédentes.
